# EUROPEAN PATENT APPLICATION

(11) **EP 4 715 607 A1**
(43) Date of publication of application: **25.03.2026**
(21) Application number: 25203511.8
(22) Date of filing: 19.09.2025
(51) Int. Cl.: G06F 12/02

(54) **SYSTEMS AND METHODS FOR FLEXIBLE ALLOCATION OF DIE RESOURCES**

(30) Priority: 20.09.2024 US 202418891035
(71) Applicant: Google LLC, Mountain View, CA 94043 (US)
(72) Inventor: TOMA, Horia Alexandru, Mountain View, California, 94043 (US); PADMANABHAN, Rammohan, Mountain View, California, 94043 (US)
(74) Representative: Betten & Resch

(57) **Abstract**

The technology is directed to systems and methods of high-bandwidth memory allocation. High-bandwidth memory may include a plurality of data channels and shareable memory that can be selectively allocated to particular data channels. In addition, bandwidth may be selectively allocated to the data channels independent of the shareable memory. The allocation of memory and bandwidth to particular data channels may be based on identified attributes of workloads that are to be associated with each data channel.

## Description

High-speed computing can be performed using computing packages that have a number of high-bandwidth memories (HBM). These HBMs can take the form of silicon dies that are connected with one another and are communicatively connected to one or more computer processors. The computer processors can access the HBMs so as to perform read/write operations in connection with particular computing tasks or workloads. The HBMs are configured so as to provide each workload with memory capacity and bandwidth. However, current systems and methods for using HBMs are not configured to efficiently allocate memory capacity and bandwidth between multiple workloads. For example, current HBMs are configured in a manner that will often overprovision memory capacity and/or bandwidth for at least some workloads. This is especially true for instances in which the workloads have relatively large differences in their memory capacity and bandwidth requirements.

### BRIEF SUMMARY

The technology is directed to systems and methods of high-bandwidth memory allocation. As described herein, high-bandwidth memories may be configured to efficiently allocate memory capacity and bandwidth to a number of workloads. The high-bandwidth memories may include a plurality of data channels and shareable memory that can be selectively allocated to particular data channels. Workloads can be assigned to particular channels that have been allocated an appropriate amount of memory capacity and bandwidth, so as to avoid over-provision or under-provision of resources. In addition, bandwidth may be selectively allocated to the data channels independent of the shareable memory. The allocation of memory and bandwidth to particular data channels may be based on identified attributes of workloads that are to be associated with each data channel.

In accordance with aspects of the disclosure, a system for allocating memory may include a plurality of interconnected high-bandwidth memory dies having a plurality of memory cells. A first memory die, from the plurality of interconnected high-bandwidth memory dies, may include a first memory cell associated with a first data channel and a second memory cell associated with a second data channel. It may also include a shareable memory that is configured to be selectively allocatable between the first data channel and the second a second data channel. In addition, the first data channel may be configured to perform read-write operations for a first workload, and the second data channel is configured to perform read-write operations for a second workload.

In accordance with other aspects of the disclosure, the plurality of interconnected high-bandwidth memory dies may be configured as a 3-D stack having a base die that is configured to control allocation of the shareable memory between the first data channel and the second data channel.

In still other aspects of the disclosure, the interconnected high-bandwidth memory dies may be further configured to assign the first channel with a selected bandwidth from a plurality of bandwidths. In addition, the memory die may further include a plurality of through-silicon vias ("TSVs"), and assigning the first channel with the selected bandwidth may include assigning a set of the TSV to the first channel. The first channel may also be assigned the selected bandwidth independently of the shareable memory.

In yet other aspects of the disclosure, the first memory die further comprising a plurality of memory-cell pairs each being associated with a pair of data channels and having shareable memory that is configured to be selectively associated with either data channel from the pair of data channels.

In accordance with another aspect of the disclosure, a controller may be communicatively connected to the plurality of interconnected high-bandwidth memory dies and be configured to selectively allocate the shareable memory based on one or more attributes of at least one of the first workload and second workload. In addition, a first portion of the shareable memory may be allocated to the first data channel and a second portion of the shareable memory may be allocated to the second data channel based on the one or more attributes. The controller may be further configured to selectively allocate bandwidth to the first channel and the second channel based on the one or more attributes.

In accordance with still other aspects of the disclosure, the first memory die may further include a bus that is communicatively connected to at least a portion of the shareable memory via a first data-path and a second data-path, and the portion of the shareable memory can be selectively allocated to the first data channel by the bus making the portion of the shareable memory accessible via the first data-path, and the portion of the shareable memory can be selectively allocated to the second data channel by the bus making the portion of the shareable memory accessible via the second data-path.

In accordance with aspects of the disclosure, a method of allocating memory may include: receiving initialization information for one or more high-bandwidth memories relating to a plurality of workloads for which data is to be stored, wherein the one or more high-bandwidth memories each have a plurality of data channels and shareable memory that can be selectively allocated to the plurality of data channels; determining a memory capacity to be provided to one or more of the workloads based on the initialization information; and selectively assigning the shareable memory to data channels of one or more high-bandwidth memories based on the memory capacity that is to be provided to the one or more workloads.

In accordance with other aspects of the disclosure, the one or more high-bandwidth memories may include a 3-D stack of high-bandwidth memory dies in communication with a base die, and the base die may selectively assign the shareable memory within the high-bandwidth memory dies.

In accordance with still other aspects of the disclosure, the method may include assigning the plurality of data channels with selected bandwidths. In addition, assigning the selected bandwidths may include assigning a set of TSVs to particular data channels, from the plurality of data channels. The shareable memory and the selected bandwidths may be assigned independently of one another.

In accordance with yet other aspects of the disclosure, the shareable memory may be associated with memory-cell pairs and assigning the shareable memory may include assigning portions of the shareable memory to at least one of the memory cells within each memory cell pair.

In accordance with other aspects of the disclosure, the initialization information may include one or more attributes of the one or more workloads, and selectively assigning the shareable memory may be based on the one or more attributes and is performed by a controller communicatively connected to the one or more high-bandwidth memories. At least one or more of the data channels may not be assigned any of the shareable memory.

In accordance with still other aspects of the disclosure, the method may include selectively allocating bandwidth to the data channels based on the one or more attributes.

In accordance with yet other aspects of the disclosure, selectively assigning the shareable memory to data channels may include assigning portions of the shareable memory to one of a first data-path or a second data-path of a bus.

### BRIEF DESCRIPTION OF THE DRAWINGS

Figure 1 is a block-diagram of a memory allocation system in accordance with aspects of the disclosure.
Figure 2 is a block-diagram of a high-bandwidth memory die in accordance with aspects of the disclosure.
Figure 3 is a block-diagram of a high-bandwidth memory that has allocated memory to a data channel in accordance with aspects of the disclosure.
Figure 4 is a block-diagram of a high-bandwidth memory that has allocated TSVs to a data channel in accordance with aspects of the disclosure.
Figure 5 is a block-diagram of a high-bandwidth memory that includes shareable memory in accordance with aspects of the disclosure.

### DETAILED DESCRIPTION

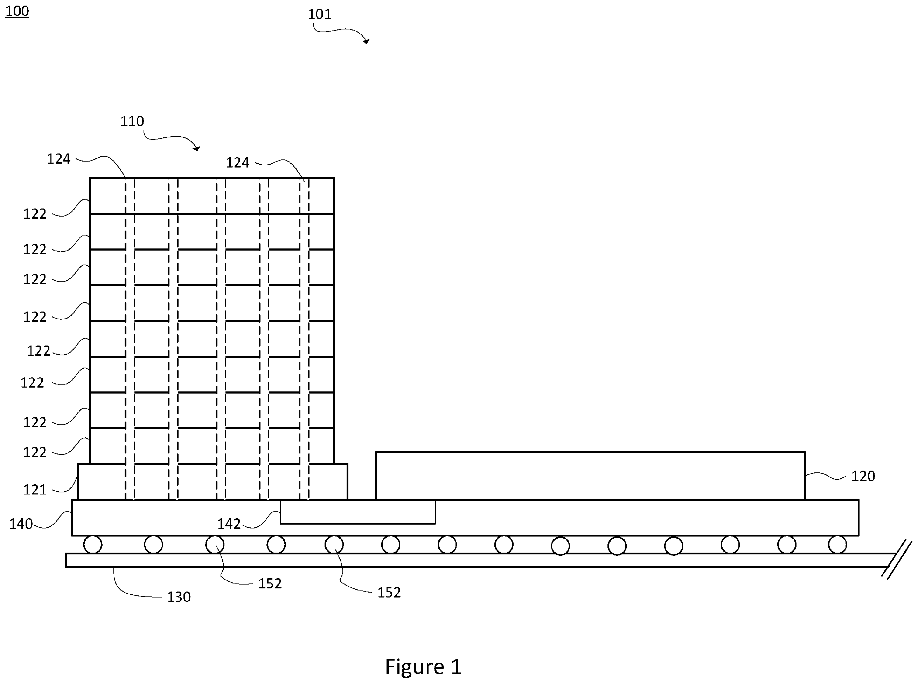

Figure 1 is a diagram 100 of a system 101 in accordance with aspects of the disclosure. System 101 includes a substrate 130 to which is connected an interposer 140, and a stack 110 of high-bandwidth memories (HBMs) 122 as well as one or more processors 120. The stack 110 may include a base die 121 as well as a number of HBM dies 122 that are stacked on top of base die 121. Base die 121 may act as a logic die or controller that is capable of directing data to and from the stack 110. Base die 121 may also contain dynamic random access memory (DRAM) and may be communicatively connected via data-paths 142 on interposer140 with one or more processors 120. In addition, interposer 140 may have a number of electrical connections 152 between interposer 140 and a substrate 130.

Each HBM die 122 may take the form of silicon chips that include DRAM and are configured to have a plurality of memory cells. Data may be transmitted to and from the memory cells of each HBM die 122 along through-silicon vias (TSVs) 124. The HBM dies 122 and TSVs 124 are configured to allow for read/write operations to be performed at high bandwidths, such as 300-500 gigabits per second (GBps) or more. In addition, processors 120 may take the form of tensor processing units (TPUs) or graphics processing units (GPUs) that are configured to perform a large number of parallel processing operations and use high-bandwidth memory made available by the HBM dies 122.

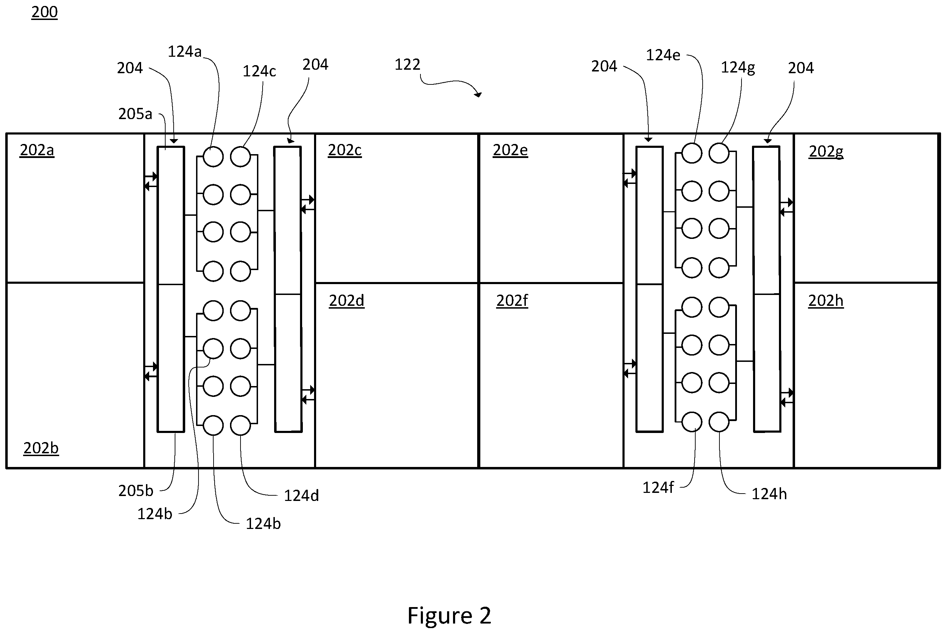

Figure 2 is a block diagram 200 of an HBM die 122 in accordance with aspects of the disclosure. HBM die 122 contains memory cells 202 and TSVs 124. Data can be stored within each memory cell 202, and data may be transmitted to and from HBM die 122 via TSVs 124a-h. In addition, HBM die 122 contains data buses 204 that are configured to transmit data between memory cells 202a-h and TSV 124a-h. Buses 204 may also include multiplexer/demultiplexers in accordance with aspects of the disclosure.

Each HBM die 122 may be configured to have a number of channels for which data is transmitted and stored. These channels may correspond to data that are associated with particular workloads, and groupings of memory cells 202 may correspond to particular channels within an HBM die 122. For example, HBM die 122 of diagram 200 contains eight sets of memory cells 202a-h. These eight memory cells 202a-h may each be associated with a particular channel within HBM die 122. In addition, data for a particular workload may be designated to be associated with a particular channel, so that data for that workload is stored within a corresponding memory cell 202a-h. Each workload may also be provided a particular bandwidth of data transmission over TSVs 124a-h. Thus, a first channel may include memory cell 202a and TSVs 124a, while a second channel may include memory cell 202b and TSVs 124b.

In some instances, the workloads for which HBM die 122 has been assigned will each have similar requirements to another, such as by requiring similar memory capacity and bandwidth. In such an instance, HBM die 122 can be configured so that each of its eight channels can be assigned a memory cell 202a-h that contain equivalent memory capacity and provide for transmission over TSVs 124 at equivalent bandwidths. However, HBM die 122 is configured so that the capacity and bandwidth of each of its channels are not fixed, but may instead be selectively altered. In addition, the capacity and bandwidth of each channel can be altered independently of one another, allowing for instances in which only a channel's capacity is altered or only its bandwidth is altered, as well as instances in which the capacity and bandwidth are altered in a manner that are not proportional to one another.

In accordance with aspects of the disclosure, at least a portion of memory cells 202a-h can be alternatively selected to be a part of more than one channel within HBM die 122. For example, in diagram 200, memory cell 202a represents the set of memory addresses that are associated with a first channel, while memory cell 202b represents the set of memory addresses that are associated with a second channel. In addition, HBM die 122 may be configured so that a first workload is associated with the first channel, thereby allowing the first workload to perform read/write operations for the memory addresses within memory cell 202a. Similarly, a second workload may be associated with the second channel of HBM die 122, thereby allowing the second workload to perform read/write operations for memory addresses within memory cell 202b. In performing write operations for the first channel, memory cell 202a can receive data provided by TSVs 124a via bus 204. Similarly, data read from memory cell 202a can be transmitted over TSVs 124a via bus 204. In performing write operations for the second channel, memory cell 202b can receive data provided by TSVs 124b via bus 204. Similarly, data read from memory cell 202b can be transmitted over TSVs 124b via bus 204.

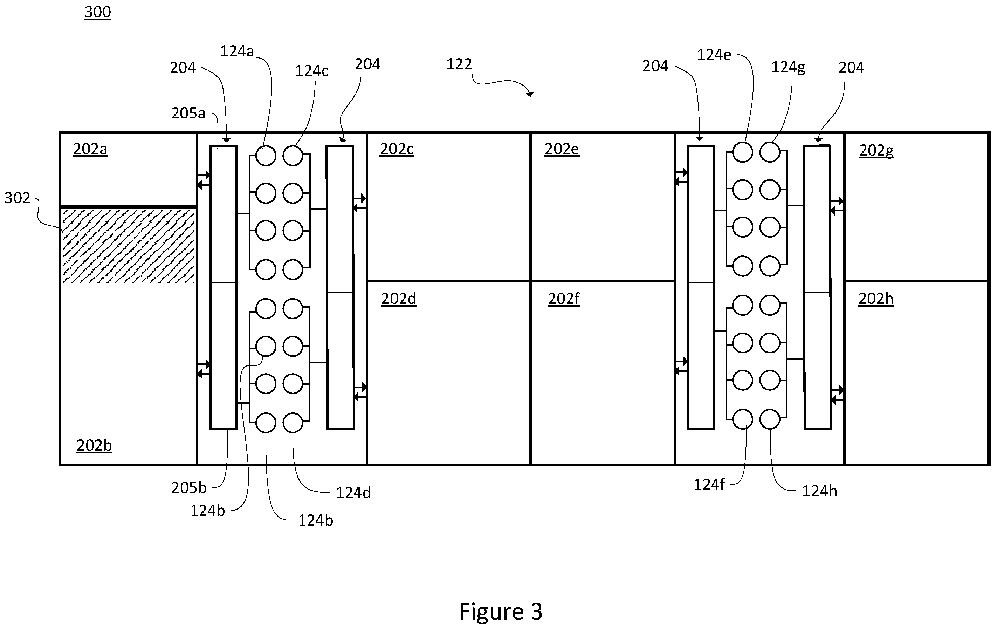

In some instances, the first channel of HBM die 122 may be assigned to a workload that has a memory capacity requirement that is relatively low with respect to the workload that has been assigned to the second channel. In such an instance, HBM die 122 can be initialized to provide the second channel with greater memory capacity than the first channel. In diagram 300 of Figure 3, some of the memory addresses that were associated with the first channel of memory cell 202a are now associated with memory cell 202b of the second channel. In particular, region 302 represents the memory addresses that have been reassigned from the first channel to the second channel within HBM die 122.

The reassigning of memory addresses from one channel to another channel may be based on re-initializing bus 204. For example, bus 204 may contain two bus-paths 205a and 205b, each of which transmit data for the first channel and second channel, respectively. Bus 204 may re-assign the memory addresses of region 302 from bus-path 205a to bus-path 205b, thereby designating memory of region 302 as being a part of memory cell 202b that is accessed by the second channel, rather than the first channel. In allowing for region 302 to be reassigned, bus 204 may contain two sets of silicon traces from memory addresses in region 302. The first set of silicon traces lead to bus-path 205a, while the second set of silicon traces lead to bus-path 205b. Bus 204 may selectively designate the memory addresses of region 302 to either bus-path 205a or bus-path 205b, thereby assigning region 302 to either the first channel or second channel, respectively. Thus, HBM die 122 of diagram 300 has been configured so that memory of region 302 is now a part of the second channel with memory cell 202b.

In addition, HBM die 122 may selectively allocate bandwidth to each channel, independently of the memory capacity that has been allocated to each channel. For example, data from memory cell 202a of the first channel may be directed along bus-path 205a to TSVs 124a, while data from memory cell 202b, including from region 302, may be directed along bus-path 205b to TSVs 124b. The set of TSVs 124a and the set of TSVs 124b may be configured to transmit data at equivalent bandwidths, thereby allowing the first channel and second channel to have equivalent bandwidths. However, TSVs 124a-b may also be selectively configurable with respect to transmission frequency, thereby allowing one channel to transmit at a higher bandwidth than another channel.

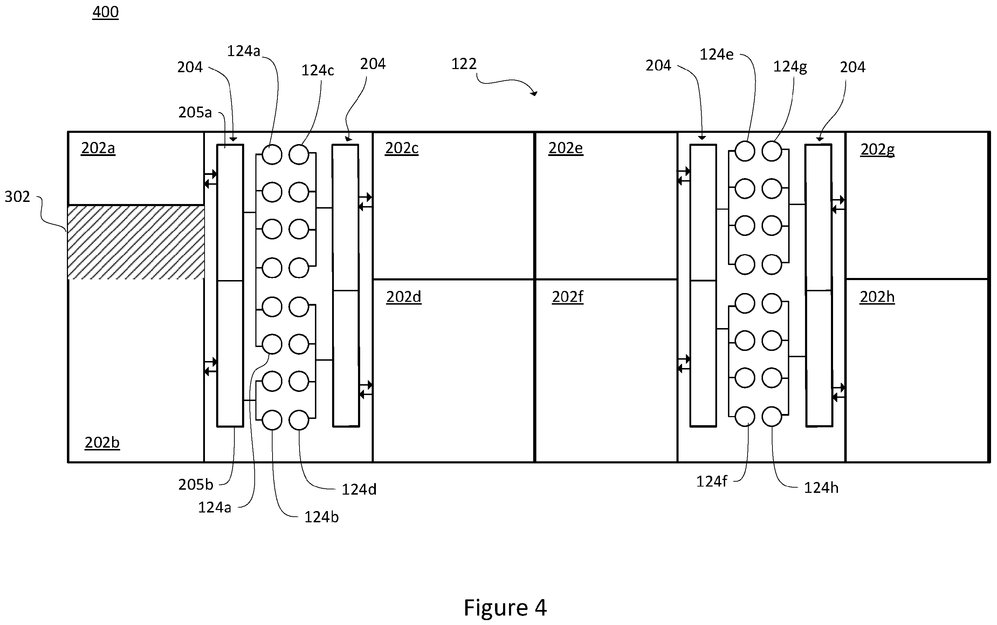

In another example, the bandwidth of each channel may be selectively allocated based on which TSVs 124 are assigned to particular channels. In diagram 300, four sets of TSVs 124a are each assigned to bus-path 205a, while four sets of TSVs 124b are each assigned to bus-path 205b. However, in diagram 400 of Figure 4, six sets of TSVs 124a are each assigned to bus-path 205a, while two sets of TSVs 125b are each assigned to bus-path 205b. Accordingly, in diagram 400, memory cell 202a of the first channel corresponds to less capacity than memory cell 202b of the second channel, however the first channel is provided with a higher bandwidth than the second channel.

In accordance with aspects of the disclosure, a particular channel within an HBM die may selectively share memory capacity with one or more other channels within that HBM die. As discussed above, HBM die 122 of Figures 2-4 contain memory cells 202a and 202b, each of which selectively share a portion of their memory capacity with each other. Accordingly, memory cells 202a and 202b can be referred to as a memory-allocation pair, due to the memory that is shared between the two cells.

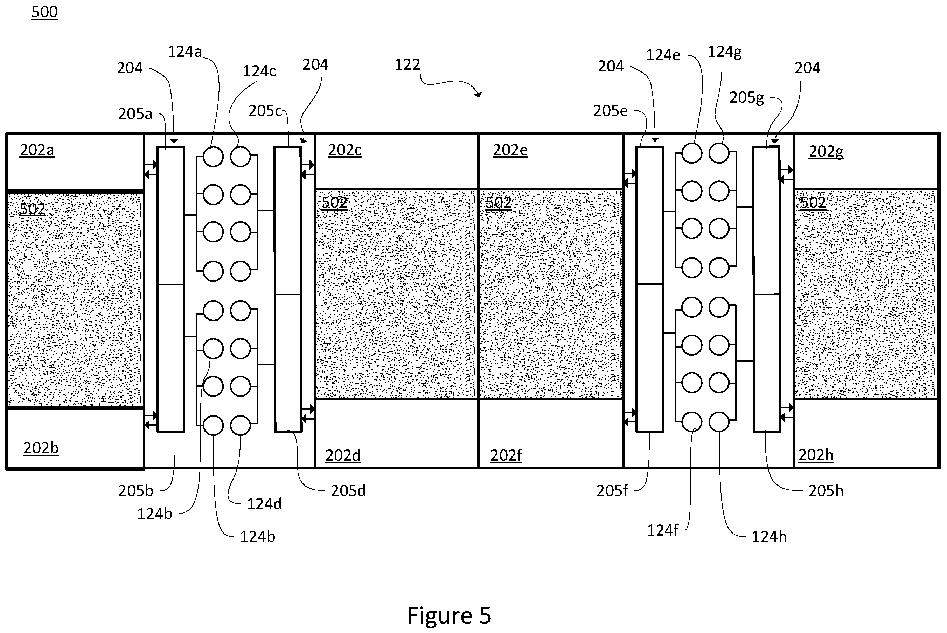

HBM die 122 may be further configured so that its eight channels are each divided into four memory-allocation pairs. This can be seen in diagram 500 of Figure 5 in which a region 502 of memory is shared by each of the four memory-allocation pairs within HBM die 122. Accordingly, region 502 may be referred to as shareable memory, as it can be selectively allocated to one memory cell or another. As discussed above, a shared region of memory, such as region 502, can be configured so that the memory addresses within region 502 have two sets of silicon traces, one for each channel to which region 502 can be associated. In addition, each bus 124 may contain a corresponding pair of bus-paths 205 that are configured to transmit data along each bus-path 205 in accordance with which channel a memory address within region 502 has been associated.

While regions 502 are designated as shared memory, HBM die 122 can be configured so that a particular memory address within region 502 is associated with only one memory cell 202 within the memory-allocation pair. Thus, channels within HBM die 122 can maintain separate sets of data for each workload and prevent conflicts from occurring between read and write operations for each workload. The assignment of portions of each region 502 to a particular channel may occur at the time HBM die 122 is initialized, and a re-initialization procedure may be implemented in order to allow for memory within regions 502 to be re-allocated to the other channel within the memory-allocation pair.

Each memory cell 202a-h may be associated with a particular amount of the shared memory within a region 502. The granularity with which the memory within region 502 can be divided between memory cells 202a-h can be based on the manner in which memory addresses within region 502 are grouped with respect to the bus-paths 205a-h of each bus 204. For example, region 502 may contain a large number of memory address groupings, which allows each grouping to be associated with one of the two bus-paths 205 of each bus 204.

In one example, each memory cell 202a-h may contain a designated amount of memory that cannot be shared with another memory cell. This non-shared memory may constitute a minimum amount of memory capacity for a particular channel. In another example, each memory cell 202a-h may be entirely sharable, thereby allowing a single channel to be associated with all of the memory within a particular memory-allocation pair. In addition, TSVs 125a-h may also be divided into transmission-allocation pairs, whereby each TSV 125a-h can be associated with one channel from a pair of potential channels. Each transmission-allocation pair of TSV can be communicatively connected to a particular bus 204 that is configured to transmit data with the TSVs 124 in connection with either of the two bus-paths 205.

In addition, an HBM die 122 may be configured with some other number of channels. For example, an HBM die 122 can contain 16, 32, 64 or more channels. If an HBM die 122 contains 32 memory cells 202, these memory cells 202 may be divided into 16 memory-allocation pairs in a manner discussed herein. In this instance, each channel may be associated with a particular memory cell 202 that can include access to some amount of shared memory, and the shared memory can be selectively assigned to one of the two channels within the memory-allocation pair.

As discussed above, diagram 500 of Figure 5 provides for sharing memory and bandwidth in accordance with memory-allocation pairs and transmission-allocation pairs, respectively. However, HBM dies 122 may also be configured to share memory from a region 502 among more than two memory cells 202. For example, a region of shared memory may be configured so that it is shared between three or more channels within an HBM die. In this instance, a shared memory region may contain memory addresses with silicon traces that lead to bus-paths for each of the channels with which the memory is shared. For example, if an HBM die has a region of shared memory that is shared among all eight channels, the memory addresses for that region will have eight traces that lead to eight different bus-paths within one or more buses.

The selective allocation of memory capacity and bandwidth for each channel allows for HBM die 122 to efficiently support various types of workloads. GPUs and TPUs can often have at least a subset of workloads that require a relatively high bandwidth, but only require a relatively low amount of memory capacity. For example, many machine learning applications, including large language models and generative artificial intelligence, include many workloads with relatively low memory requirements. A typical HBM will often over-provision memory for these workloads, resulting in inefficient usage of the HBM and higher total cost of ownership. In addition, some workloads may require relatively high memory capacity, and these high-capacity workloads may be under-provisioned by typical HBMs. The same is also true for bandwidth and relative TSV usage for various workloads, as some workloads may require a relatively high bandwidth with respect to other workloads that are being handled by the HBM. By allowing for channels within HBM die 122 to have selectively allocatable capacity and bandwidth in the manner described herein, HBM die 122 can properly provision workloads with respect to both memory capacity and bandwidth. This will often decrease the overall number of HBM dies 122 that are required to perform particular sets of workloads and will reduce total cost of ownership.

Returning to Figure 1, base die 121 may be configured to perform an initialization operation for HBM dies 122 within stack 110. For example, base die 121 may receive data from processors 120 that can be used to initialize channels of the HBM dies 122 so that they are allocated the necessary memory capacity and bandwidth. For example, the received data may identify attributes of the workloads that will be performed by processors 120. These attributes may include memory capacity and bandwidth requirements for each workload for which HBM dies 122 will be responsible. Based on the received workload attributes, base die 121 may transmit initialization commands to HBM dies 122 that include, for example, instructions for assigning portions of shared memory to particular channels within the HBM die 122. In addition, base die 121 may be configured to control the bandwidth of dataflow for each channel within each HBM die 122.

In addition, TSVs 124 may be associated with particular workloads based on the received workload attributes. Once initialization of stack 110 has occurred, each HBM die 122 within stack 110 can have channels that are associated with particular workloads provided from processors 120, and these channels can be configured to have a particular memory capacity and bandwidth in accordance with that workload's attributes. The configuration of the channels within HBM dies 122 can be stored on base die 121 and transmitted to processors 120.

As discussed herein, some workloads may be assigned to channels with a relatively low amount of memory capacity, thereby allowing other workloads to access more memory within the HBM dies 122. In addition, each workload may be selectively assigned a particular amount of bandwidth. For example, base die 121 can perform an initialization process whereby it will transmit twice as much data for a first workload that has been assigned to a first channel relative to a second workload that has been assigned to a second channel. In another example, the channels may be allocated bandwidth based on allocations of particular sets of TSVs 124 or based on TSV 124 frequencies, each of which may also be controlled by base die 121.

In addition, reliability, availability, and serviceability features for stack 110 may also be adjusted in accordance with the memory sharing and bandwidth configurations that are being maintained within stack 110. For example, rowhammering, error detection, and error correction operations can be performed based on the manner in which memory and bandwidth has been shared among the channels of HBM dies 122. In addition, base die 121 may contain a register that maintains the memory and bandwidth requirements of each channel within stack 110. This register can be accessed in connection with operations of processors 120, so as to prevent particular workloads from accessing more than the designated amount of memory or from seeking more than the designated amount of bandwidth. In addition, the register may store information regarding retired memory areas within HBM dies 122.

While diagram 100 of Figure 1 is of a system 101 in which stack 110 is located on the same device as processors 120, it is not required for the components of system 101 to reside on a single device. For example, processors 120 may reside on a remote device that is communicatively connected to stack 110 via base die 121. The connection between stack 110 and processors 120 may be electrical, optical, or some other form of communicative connection.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples. Further, the same reference numbers in different drawings can identify the same or similar elements.

## Claims

1. A system for allocating memory comprising:
a plurality of interconnected high-bandwidth memory dies having a plurality of memory cells;
a first memory die, from the plurality of interconnected high-bandwidth memory dies, comprising:
a first memory cell associated with a first data channel and a second memory cell associated with a second data channel;
a shareable memory that is configured to be selectively allocatable between the first data channel and the second a second data channel; and
wherein the first data channel is configured to perform read-write operations for a first workload, and the second data channel is configured to perform read-write operations for a second workload.

2. The system of claim 1, wherein the plurality of interconnected high-bandwidth memory dies are configured as a 3-D stack having a base die that is configured to control allocation of the shareable memory between the first data channel and the second data channel.

3. The system of claim 1 or claim 2, wherein the interconnected high-bandwidth memory dies are further configured to assign the first channel with a selected bandwidth from a plurality of bandwidths.

4. The system of claim 3, wherein the memory die further comprises a plurality of through-silicon vias ("TSVs"), and wherein assigning the first channel with the selected bandwidth comprises assigning a set of the TSV to the first channel; and/or wherein the first channel is assigned the selected bandwidth independently of the shareable memory.

5. The system of any one of claims 1 to 4, the first memory die further comprising a plurality of memory-cell pairs each being associated with a pair of data channels and having shareable memory that is configured to be selectively associated with either data channel from the pair of data channels.

6. The system of any one of claims 1 to 5, further comprising a controller communicatively connected to the plurality of interconnected high-bandwidth memory dies that is configured to selectively allocate the shareable memory based on one or more attributes of at least one of the first workload and second workload.

7. The system of claim 6, wherein a first portion of the shareable memory is allocated to the first data channel and a second portion of the shareable memory is allocated to the second data channel based on the one or more attributes; and/or
wherein the controller is further configured to selectively allocate bandwidth to the first channel and the second channel based on the one or more attributes.

8. The system of any one of claims 1 to 7, wherein the first memory die further comprises a bus that is communicatively connected to at least a portion of the shareable memory via a first data-path and a second data-path, and wherein the portion of the shareable memory is capable of being selectively allocated to the first data channel by the bus making the portion of the shareable memory accessible via the first data-path, and wherein the portion of the shareable memory is capable of being selectively allocated to the second data channel by the bus making the portion of the shareable memory accessible via the second data-path.

9. A method of allocating memory comprising:
receiving initialization information for one or more high-bandwidth memories relating to a plurality of workloads for which data is to be stored, wherein the one or more high-bandwidth memories each have a plurality of data channels and shareable memory that can be selectively allocated to the plurality of data channels;
determining a memory capacity to be provided to one or more of the workloads based on the initialization information; and
selectively assigning the shareable memory to data channels of one or more high-bandwidth memories based on the memory capacity that is to be provided to the one or more workloads.

10. The method of claim 9, wherein the one or more high-bandwidth memories comprise a 3-D stack of high-bandwidth memory dies in communication with a base die, and wherein the base die selectively assigns the shareable memory within the high-bandwidth memory dies.

11. The method of claim 10, further comprising assigning the plurality of data channels with selected bandwidths.

12. The method of claim 11, wherein assigning the selected bandwidths comprises assigning a set of TSVs to particular data channels, from the plurality of data channels; and/or
wherein the shareable memory and the selected bandwidths are assigned independently of one another.

13. The method of any one of claims 9 to 12, wherein the shareable memory is associated with memory-cell pairs and wherein assigning the shareable memory comprises assigning portions of the shareable memory to at least one of the memory cells within each memory cell pair; and/or
wherein selectively assigning the shareable memory to data channels further comprises assigning portions of the shareable memory to one of a first data-path or a second data-path of a bus

14. The method of any one of claims 9 to 13, wherein the initialization information comprises one or more attributes of the one or more workloads, and wherein selectively assigning the shareable memory is based on the one or more attributes and is performed by a controller communicatively connected to the one or more high-bandwidth memories.

15. The method of claim 14, wherein at least one or more of the data channels are not assigned any of the shareable memory; and/or
further comprising selectively allocating bandwidth to the data channels based on the one or more attributes.
